# EUROPEAN PATENT SPECIFICATION

(11) **EP 1 812 277 B1**
(45) Date of publication and mention of the grant of the patent: **16.04.2008**
(21) Application number: 04800254.7
(22) Date of filing: 02.11.2004
(51) Int. Cl.: B62D 33/067, B62D 21/15

(54) **ARRANGEMENT FOR VEHICLE CABS**
ANORDNUNG FÜR FAHRZEUGKABINEN
DISPOSITIF DESTINE A DES CABINES DE VEHICULE

(43) Date of publication of application: 01.08.2007
(73) Proprietor: VOLVO LASTVAGNAR AB, 405 08 Göteborg (SE)
(72) Inventor: HASSELBERG, Lars, S-416 53 Göteborg (SE)
(74) Representative: Fröhling, Werner Otto
(86) International application number: PCT/SE2004/001591
(87) International publication number: WO 2006/049536

(56) References cited:
- WO-A1-03/101809
- DE-A1- 4 240 449
- DE-C1- 10 221 346
- FR-A1- 2 734 781
- JP-A- 11 227 630

## Description

### TECHNICAL FIELD

The invention relates to an arrangement for a vehicle having a so-called front-built vehicle cab of the type which incorporates a cab bottom part, supporting at least one driver's seat, normally incorporating a seat chassis disposed on the floor, which cab bottom part has a front section and a rear section and side sections extending in the longitudinal direction of the cab and of the vehicle, and which cab is disposed on a vehicle underbody, situated beneath the cab, by means of a bearing arrangement disposed at the front end of the cab and incorporating at least two cab legs, one disposed on each respective side section of the floor section.

### BACKGROUND

A large number of modern trucks are built with a so-called front-built cab (cab over), i.e. with the cab above the engine, in contrast to the traditional "standard-built" construction with the cab behind the engine. One reason for this is that the vehicle becomes shorter, or, in other words, that the payload part can be made longer, in dependence on legal provisions, etc. Such a construction means that the driver on his seat is farther forward and, in the event of collision with a vehicle ahead, is less protected than with a standard-built cab in which the driver is farther from the front end of the vehicle and can be protected by, inter alia, the engine with surrounding components. In order to compensate for this, the cab can be designed with various types of preventive protection in the form of beams. One example of this is shown in Japanese patent application 08-091661. This Japanese publication shows a cab with beams present beneath the cab. The beams are not straight but are designed to follow the non-flat cab floor such that the beams are bent in certain sections. In case of a collision in the longitudinal direction against the cab, this means that the beams bend further at the already existing bends, which act as bending notches, and the refinement in the Japanese publication is based on the fact that the beams are reinforced along a bend beneath the front edge of the seat. This offers a protection in case of collisions, but the protection is open to further improvement.

An arrangement for a vehicle cab as described in the preamble of claim 1 is known from the document WO 03/101809 A1.

### SUMMARY OF THE INVENTION

The present invention sets out to further reduce the injury risk for the driver and any passengers present in the vehicle cab and this is made possible according to the invention with a cab in which the cab legs extend along the side sections of the floor section from a front position on the front section of the cab to a rear position situated essentially behind the fastening of the seat to the floor section, and in that that part of the floor section which extends rearward from the rear position of the cab legs and comprises the rear section of the floor section is provided with at least one deformation-energy-absorbing element.

In a particularly advantageous embodiment of the invention, the deformation-absorbing elements are constituted by beams, which advantageously have a segmented configuration. The segments of the floor can also be arranged, in the longitudinal direction of the floor section, with a geometry in which the compressive stress at the most heavily loaded point in each segment is constant or increasing for following segments in the rearward direction.

A further embodiment of the invention is provided with tower brackets disposed on the underbody and articulately coupled to the respective cab leg. These are provided with a rearward displacement facility of the upper tower part coupled to the cab legs, in order further to reduce deformation of the cab under collision load stress.

In certain cases, the tower bracket and the cab legs can be articulately linked to allow the cab to be tilted.

### DESCRIPTION OF THE FIGURES

The invention will be described in greater detail below and explained in connection with figures in the appended drawings, in which:
fig. 1 shows, from the side, parts relevant to the invention, i.e. a cab floor with supporting components in a vehicle cab according to the invention,
fig. 2 shows, in somewhat pared representation, a vehicle cab according to fig. 1 obliquely from the front, obliquely from below, and
fig. 3 shows, also in somewhat pared representation, a vehicle cab according to the invention and fig. 1 obliquely from the front, obliquely from above.

### DESCRIPTION OF ILLUSTRATIVE EMBODIMENTS

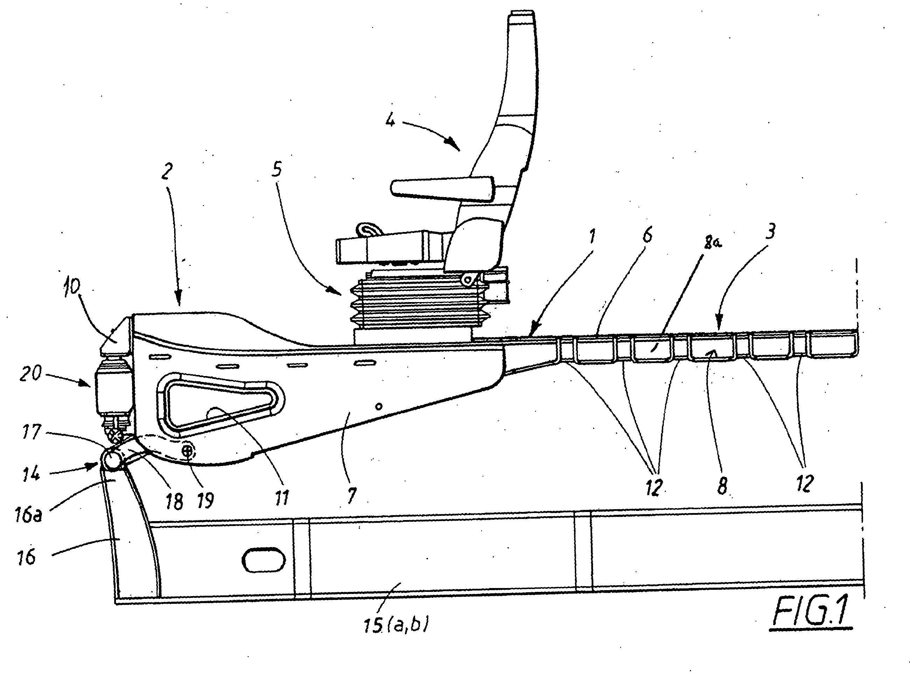

In order in the appended drawings better to illustrate the inventive concept behind the example shown, the roof, rear and front wall and side walls which normally belong to a cab have been omitted from the figures. Thus, in figure 1-3, a cab bottom part 1 having a front section 2 and a rear section 3 is shown. The cab bottom part supports a driver's seat 4 having a seat chassis 5. At the bottom of the cab bottom part 1, which, in a known manner, incorporates a whole floor section 6 or one made of a plurality of usually compression-molded plates, there are situated two cab legs 7 and, in the longitudinal direction of the cab legs, two floor beams 8 extending along side sections 9 of the cab bottom part. The cab legs and the beams are substantially parallel, identical and extend substantially parallel with the longitudinal direction of the vehicle. The cab legs 7 extend from the front end of the cab back to an imaginary transverse line in the cab, which line is situated behind the seat chassis 5. The cab legs have a substantially triangular shape, viewed from the side, with the apex to the rear and the base vertical, situated in the front section of the cab. The two cab legs are each constituted by two parallel plates 7a and 7b, situated on either side of their floor beam 8. They are also provided with a likewise substantially triangular, weight-saving cutout 11 in a substantially central section. The plates 7a and 7b are welded to the floor and the beams 8 and have a, in comparison to the beams 8, great flexural rigidity in their respective planes, which flexural rigidity derives from the fact that they have been made in a plate thickness expertly chosen for this purpose and have an extent in the vertical direction which is significantly greater than the respective beam 8. In addition, the beams 8, in their parts situated behind said transverse line behind the seat chassis, are configured with deformation notches 12, which are intended, under load stress or compressive stress in the longitudinal direction, to constitute a bending notch and define deformation-energy-absorbing segments of the beam 8. Those parts of the beams which are situated between the deformation notches 12 are also capable of absorbing deformation energy. Preferably, the beam 8 is designed with a geometry in which the compressive stress at the most heavily loaded point in each segment is constant or increasing for following segments in the rearward direction. The rigidity of the cab legs and the in-built deformation notches of the beams produce all in all, in case of a front-on crash, i.e. an accident where the cab is pressed against the loading platform or a so-called rear stem disposed in a known manner behind the cab, a deformation energy absorption, starting progressively from the rear, upon buckling of the beams 8 and of the floor pieces situated on the beam bucklings, while that part of the floor which supports the seat chassis and the driver's seat remains intact and the distance between the cab front end and the driver's seat is maintained.

At the front end of the cab legs 7 there is disposed a bracket arrangement 14 for fixing the cab to a vehicle frame 15 situated beneath the cab, which frame, in the example shown, consists of a pair of parallel beams 15a and 15b. The beams are, in a known manner, U-shaped, with the opening of the U pointing inward. At the front end of the two beams, a respective tower bracket 16 is fixedly disposed. The tower bracket 16 has a section 16a which juts up above the respective beam 15a, b and supports a first joint 17. Arranged coupled to the joint 17 is one end of a link arm 18, which has another end which is fastened, between a respective pair of plates 7a and 7b, to a second joint 19. Arranged in a known manner between the respective link and a spring suspension bracket 10 disposed on the cab underbody, there is a spring arrangement 20 (not described in detail) for cushioning the cab from the vehicle frame 15 with chassis (not shown).

The tower bracket 16 is arranged with the jutting-up section 16a situated above the top side of the respective frame beam, such that the height of the bracket is approximately twice that of the beam. This means that, in the event of a frontal collision, the jutting-up section 16a of the tower bracket with the joint 17 has room for rearward displacement through deformation of the tower bracket 16. Since the joint 17 is coupled by the link arm 18 to the cab legs 7 and hence the cab, the cab will also be displaced rearward.

When the cab is displaced rearward, a normally existing air gap to a loading platform, rear stem or equivalent disposed behind the cab is bridged. If the cab floor 6 and the floor beams 8 hereupon occupy the rigid loading platform and the cab, as a result of the collision force against the front end of the cab, continues its rearward displacement, something has to yield, and by virtue of the deformation notches 12 in the floor beams 8, the floor section 6 and the beams 8 are then deformed at the notches as energy is absorbed, whereas that part of the floor which is situated adjacent to the rigid cab legs 7 and which supports the seat chassis 5 and the driver's seat 4 will be substantially unaltered. The whole of the space behind the driver's seat can thus be used to absorb deformation energy, whereas that space in the cab in which the driver (and any passenger) is present is kept virtually intact.

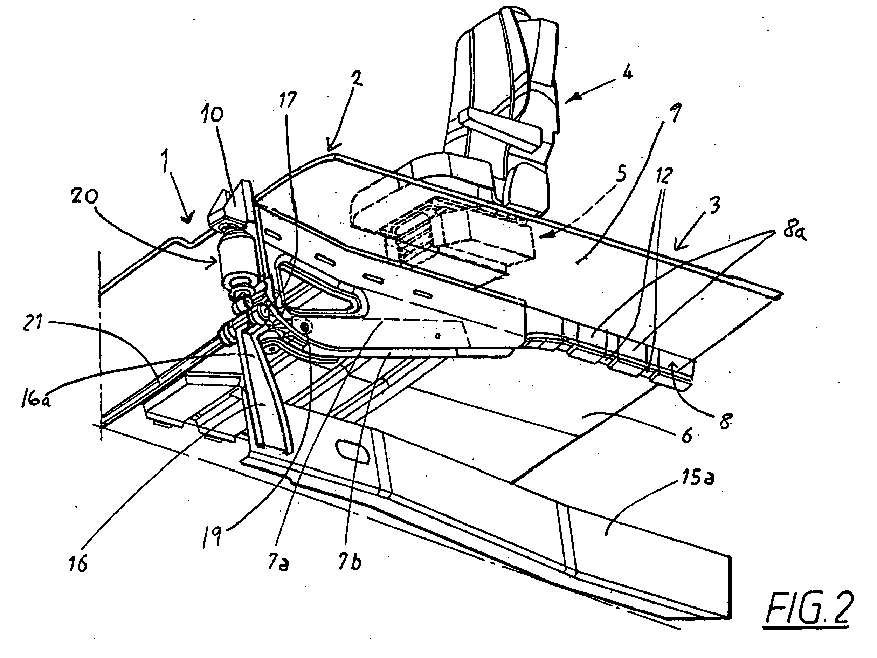

Fig. 2 shows the same construction as in fig. 1, though obliquely from the front, from below. On parts corresponding to those in figure 1, the same reference notations have been used. In the figure can be seen the left-hand tower bracket 16, cab leg 7 and floor beam 8 of the cab, which are arranged to interact in the above-described manner in a collision in which the point of contact lands above the frame, for example in case of a collision with a truck or trailer platform, another truck cab or a loading bridge. The figure also demonstrates that running between the joints is a rod 21, which stabilizes the tower brackets 16 in the lateral direction of the vehicle.

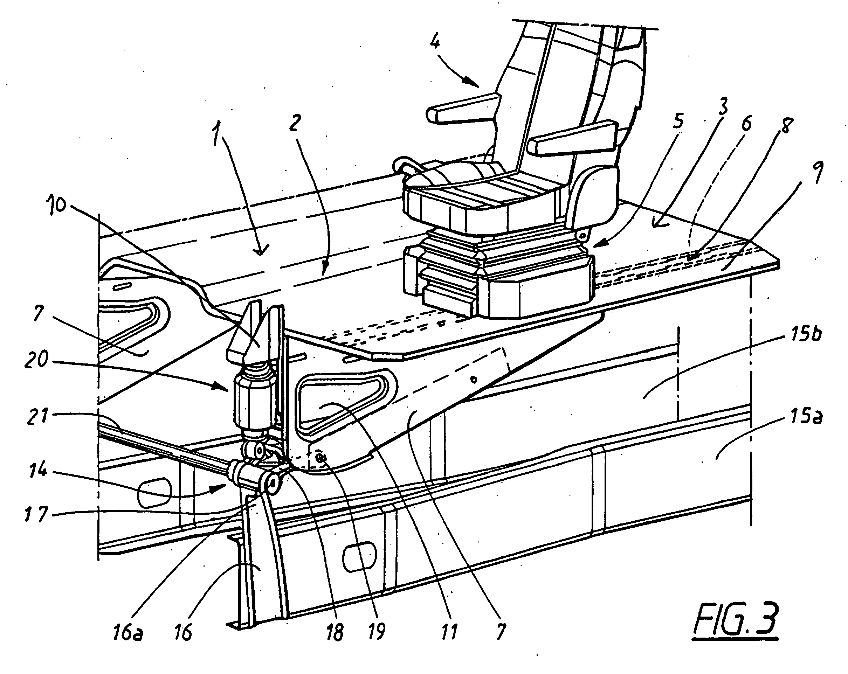

Fig. 3 shows the invention obliquely from above, from the front. On parts corresponding to those in fig. 1 and 2, the same reference notations have been used. In fig. 3 it can be seen how the front section 2 of the floor supports the seat together with its chassis, and a space behind the seat, the rear section 3 of the floor, is available as deformation space.

Arranged in a known manner on the vehicle, close to the cab rear edge, there are normally rear bearing devices, which, together with cab legs disposed in the front section, support the cab. The rear bearing devices are normally resilient, also in a known manner, in order to give better traveling comfort for those who are resident in the cab. If the cab is tiltable, the rear bearing devices are usually detachable and interacting with openable couplings which are closed when the cab must not be tilted or is in the tilted state. Since these rear devices do not form part of the invention and are known, they have not here been given a detailed description.

The invention is not limited to the illustrative embodiment which has been described above, but is defined by the appended patent claims. For example, the invention is also applicable to cabs which are not tiltable. In addition, the deformation-absorbing elements can be integrated in the platform 6, even over the whole of its width. It can also be advantageous if the tower brackets 16, in their upper part 16a, have a hardening which is more pliable than other parts of the bracket such that, under an abnormally strong stress, they yield with the absorption of deformation force, without breaking apart. Variously sized cab legs can also be imagined, depending on what is sitting on the driver's side. The tower brackets 16, which are fixed to the beams 15 of the frame by, for example, a rivet joint or bolt connection (not shown), have the upwardly tapered and slightly inclined geometry indicated in the drawings in order to produce a controlled deformation under collision stress of a sufficiently powerful nature, i.e. such that the stretch limit for the material in the respective tower bracket is exceeded.

## Claims

1. An arrangement for a vehicle having a so-called front-built vehicle cab of the type which incorporates a cab bottom part (1), supporting at least one driver's seat (4, 5), which cab bottom part has a floor section having a front section (2), a rear section (3) and side sections (9) extending between the front section and the rear section in the longitudinal direction of the cab and of the vehicle, and which cab is disposed on a vehicle underbody (15a, b), situated beneath the cab, by means of a bearing arrangement disposed at the front end of the cab and incorporating at least two cab legs (7), one disposed on each respective side section of the floor section, **characterized in that** the cab legs (7) extend along the side sections (9) of the floor section from a front position on the front section (2) of the cab to a rear position situated essentially behind the fastening of the seat (4, 5) to the floor section (6), and **in that** that part of the floor section which extends rearward from the rear position of the cab legs and comprises the rear section (3) of the floor section is provided with at least one deformation-energy-absorbing element (8).

2. The arrangement as claimed in claim 1, **characterized in that** the deformation-absorbing arrangement comprises a set of segments (8a) disposed consecutively in the rearward direction, with deformation notches (12) situated on the segments.

3. The arrangement as claimed in claim 1 or 2, **characterized in that** the deformation-absorbing elements are constituted by beams (8) of segmented configuration.

4. The arrangement as claimed in claim 2 or 3, **characterized in that** the segments (8) of the floor in the longitudinal direction of the floor section are arranged with a geometry in which the compressive stress at the most heavily loaded point in each segment is constant or increasing for following segments in the rearward direction.

5. The arrangement as claimed in any one of the preceding claims, **characterized by** tower brackets (16) which are disposed on the underbody (1) and coupled to the respective cab leg (7) and are provided with a space for rearward displacement, under collision load stress, of the upper tower part (16a) coupled to the cab legs.

6. The arrangement as claimed in claim 5, **characterized in that** the tower brackets (16) and corresponding cab legs (7) are articulately linked to allow the cab to be tilted.

7. The arrangement as claimed in claim 5 or 6, **characterized in that** the upper part of the tower brackets (16a) has a more pliable hardening than the bottom part.

8. The arrangement as claimed in any one of claims 5-7, **characterized in that** the tower brackets (16), which are fixed to the beams (15) of the frame by, for example, a rivet joint or bolt connection (not shown), have an upwardly tapered geometry designed to produce a controlled deformation under collision stress of such a nature that the stretch limit for the material in the respective tower bracket is exceeded.

## Patentansprüche

1. Anordnung für ein Fahrzeug, das eine sogenannte Frontbau-Fahrzeugkabine mit der Bauweise hat, die einen Kabinenbodenteil (1) aufweist, der wenigstens einen Fahrersitz (4, 5) trägt, wobei der Kabinenbodenteil einen Fußbodenabschnitt mit einem vorderen Abschnitt (2), einem hinteren Abschnitt (3) und Seitenabschnitten (9) hat, die sich zwischen dem vorderen Abschnitt und dem hinteren Abschnitt in der Längsrichtung der Kabine und des Fahrzeugs erstrecken, und wobei die Kabine an einem Fahrzeugunterbau (15a, b), der sich unter der Kabine befindet, mit Hilfe einer Lageranordnung angeordnet ist, die am vorderen Ende der Kabine sitzt und wenigstens zwei Kabinenschenkel (7) aufweist, von denen einer an jedem entsprechenden Seitenabschnitt des Fußbodenabschnitts angeordnet ist, **dadurch gekennzeichnet, dass** die Kabinensachenkel (7) sich längs der Seitenabschnitte (9) des Fußbodenabschnitts von einer vorderen Position an dem vorderen Abschnitt (2) der Kabine zu einer hinteren Position erstrecken, die sich im Wesentlichen hinter der Befestigung des Sitzes (4, 5) an dem Fußbodenabschnitt (6) befindet, und dass der Teil des Fußbodenabschnitts, der sich von der hinteren Position der Kabinenschenkel aus nach hinten erstreckt und den hinteren Abschnitt (3) des Fußbodenabschnitts aufweist, mit wenigstens einem Verformungsenergie absorbierenden Element (8) versehen ist.

2. Anordnung nach Anspruch 1, **dadurch gekennzeichnet, dass** die eine Verformung absorbierende Anordnung einen Satz von Segmenten (8a) aufweist, die aufeinanderfolgend in der Richtung nach hinten angeordnet sind, wobei an den Segmenten Verformungseinkerbungen (12) vorgesehen sind.

3. Anordnung nach Anspruch 1 oder 2, **dadurch gekennzeichnet, dass** die die Verformung absorbierenden Elemente von Trägern (8) mit segmentierter Ausgestaltung gebildet werden.

4. Anordnung nach Anspruch 2 oder 3, **dadurch gekennzeichnet, dass** die Segmente (8) des Fußbodens in der Längsrichtung des Fußbodenabschnitts mit einer Geometrie angeordnet sind, bei der die Druckspannung an dem am stärksten belasteten Punkt in jedem Segment konstant ist oder für die in Rückwärtsrichtung folgenden Segmente zunimmt.

5. Anordnung nach einem der vorhergehenden Ansprüche, **gekennzeichnet durch** Säulenstützen (16), die an dem Unterbau (1) angeordnet, mit dem jeweiligen Kabinenschenkel (7) gekoppelt sowie mit einem Raum für eine Verschiebung nach hinten unter einer Kollisionsbelastungsspannung des oberen Säulenteils (16a) versehen sind, der mit den Kabinenschenkeln gekoppelt ist.

6. Anordnung nach Anspruch 5, **dadurch gekennzeichnet, dass** die Säulenstützen (16) und die entsprechenden Kabinenschenkel (7) angelenkt sind, damit die Kabine gekippt werden kann.

7. Anordnung nach Anspruch 5 oder 6, **dadurch gekennzeichnet, dass** der obere Teil (16a) der Säulenstützen eine stärker biegbare Härtung als der untere Teil hat.

8. Anordnung nach einem der Ansprüche 5 bis 7, **dadurch gekennzeichnet, dass** die Säulenstützen (16), die an den Trägern (15) des Rahmens beispielsweise durch eine Niet- oder Bolzenverbindung (nicht gezeigt) fixiert sind, eine sich nach oben verjüngende Geometrie haben, die so ausgelegt ist, dass sie eine gesteuerte Verformung unter Kollisionsspannung einer solchen Art erzeugt, dass die Streckgrenze für das Material in der jeweiligen Säulenstütze überschritten sind.

## Revendications

1. Agencement pour un véhicule ayant ce qu'on appelle une cabine de véhicule construite à l'avant, du type qui incorpore une partie inférieure de cabine (1), supportant au moins un siège conducteur (4, 5), laquelle partie inférieure de cabine a un tronçon de plancher ayant un tronçon avant (2), un tronçon arrière (3) et des tronçons latéraux (9) s'étendant entre le tronçon avant et le tronçon arrière dans la direction longitudinale de la cabine et du véhicule, et laquelle cabine est disposée sur un soubassement de carrosserie de véhicule (15a, b), situé sous la cabine, au moyen d'un agencement d'appui disposé à l'extrémité avant de la cabine et incorporant au moins deux montants de cabine (7), un disposé sur chaque tronçon latéral respectif du tronçon de plancher, **caractérisé en ce que** les montants de cabine (7) s'étendent le long des tronçons latéraux (9) du tronçon de plancher depuis une position avant du tronçon avant (2) de la cabine jusqu'à une position arrière située sensiblement derrière la fixation du siège (4, 5) jusqu'au tronçon de plancher (6), et **en ce que** cette partie du tronçon de plancher qui s'étend vers l'arrière depuis la position arrière des montants de cabine et qui comporte le tronçon arrière (3) du tronçon de plancher est munie d'au moins un élément absorbant de l'énergie de déformation (8).

2. Agencement comme revendiqué dans la revendication 1, **caractérisé en ce que** l'agencement d'absorption de déformation comporte un ensemble de segments (8a) disposés consécutivement dans la direction vers l'arrière, des encoches de déformation (12) étant situées sur les segments.

3. Agencement comme revendiqué dans la revendication 1 ou 2, **caractérisé en ce que** les éléments d'absorption de déformation sont formés par des poutres (8) ayant une configuration segmentée.

4. Agencement comme revendiqué dans la revendication 2 ou 3, **caractérisé en ce que** les segments (8) du plancher dans la direction longitudinale du tronçon de plancher sont agencés en ayant une géométrie dans laquelle la contrainte de compression au niveau du point le plus lourdement sollicité dans chaque segment est constante ou augmente pour des segments suivants dans la direction vers l'arrière.

5. Agencement comme revendiqué dans l'une quelconque des revendications précédentes, **caractérisé par** des supports formant pylônes (16) qui sont disposés sur le soubassement de carrosserie (1) et sont reliés au montant de cabine respectif (7) et comportent un espace pour un déplacement vers l'arrière, sous l'effet d'une contrainte de charge due à une collision, de la partie de pylône supérieure (16a) reliée aux montants de cabine.

6. Agencement comme revendiqué dans la revendication 5, **caractérisé en ce que** les supports formant pylônes (16) et les montants de cabine correspondants (7) sont reliés de manière articulée pour permettre à la cabine de s'incliner.

7. Agencement comme revendiqué dans la revendication 5 ou 6, **caractérisé en ce que** la partie supérieure des supports formant pylônes (16a) a un durcissement plus souple que la partie inférieure.

8. Agencement comme revendiqué dans l'une quelconque des revendications 5 à 7, **caractérisé en ce que** les supports formant pylônes (16), qui sont fixés sur les poutres (15) du châssis par, par exemple, un rivetage ou un boulonnage (non représenté), ont une géométrie rétrécie vers le haut conçue pour produire une déformation commandée sous l'effet d'une contrainte de collision de nature telle que la limite d'allongement pour le matériau dans le support formant pylône respectif est dépassée.
